# EUROPEAN PATENT SPECIFICATION

(11) **EP 2 375 474 B1**
(45) Date of publication and mention of the grant of the patent: **15.02.2017**
(21) Application number: 11160223.1
(22) Date of filing: 29.03.2011
(51) Int. Cl.: H01M 2/22

(54) **Secondary battery and secondary battery module**
Sekundärbatterie und Sekundärbatteriemodul
Batterie secondaire et module de batterie secondaire

(30) Priority: 30.03.2010 US 282771 P; 08.02.2011 US 929678
(43) Date of publication of application: 12.10.2011
(73) Proprietor: Samsung SDI Co., Ltd., Gyeonggi-do (KR); Robert Bosch GmbH, 70442 Stuttgart (DE)
(72) Inventor: Byun, Sang-Won, Gyeonggi-do (KR); Ahn, Byung-Kyu, Gyeonggi-do (KR)
(74) Representative: Gulde & Partner

(56) References cited:
- EP-A2- 1 244 170
- WO-A1-2011/067025
- JP-A- 2003 045 408
- US-A1- 2004 023 107

## Description

### FIELD OF THE INVENTION

Embodiments relate to a secondary battery and a secondary battery module.

### DESCRIPTION OF THE RELATED ART

Secondary batteries are rechargeable batteries, and are broadly used in portable electronic devices, e.g., cellular phones, notebook computers, and camcorders.

A secondary battery may be formed by inserting an electrode assembly, in which a positive electrode, a negative electrode, and a separator are wound in the form of a jelly roll, into a case through an opening of the case, and covering the opening by using a cap assembly. Current collecting plates may be coupled to respective ends of the electrode assembly and are electrically connected to a terminal unit of the cap assembly. Accordingly, if an external terminal is connected to the terminal unit, current generated in the electrode assembly may be provided to the external terminal via the current collecting plates and the terminal unit.

The terminal unit may include a positive electrode rivet and a negative electrode rivet connected to the current collecting plates. The terminal unit may also include rivet terminals bonded to the positive and negative electrode rivets in order to be connected to bus bars. Bonding between the positive electrode rivet or the negative electrode rivet and a rivet terminal, and between a rivet terminal and a bus bar may be performed by using a laser welding method.

### SUMMARY

Embodiments are directed to a secondary battery and a secondary battery module, which represent advances over the related art.

At least one of the above and other features and advantages may be realized by providing a secondary battery including an electrode assembly, the electrode assembly including a positive electrode, a negative electrode, and a separator therebetween; a case for accommodating the electrode assembly; a cap plate for sealing the case; and at least one terminal unit, the at least one terminal unit including an electrode rivet electrically connected to one of the electrodes of the electrode assembly and formed of a first metallic material, a rivet terminal formed of a second metallic material, the second metallic material being different from the first metallic material, and a clad unit between the electrode rivet and the rivet terminal.

The above terminal unit may also be called a first terminal unit, the electrode rivet may be a first electrode rivet, the rivet terminal may be a first rivet terminal.

The clad unit may include an outer layer surrounding an inner layer, the outer layer being formed of the second metallic material and the inner layer being formed of the first metallic material.

The outer layer may be welded to the rivet terminal.

The electrode rivet may be engaged with the clad unit.

The electrode rivet may be welded to the inner layer of the clad unit.

The clad unit preferably has the form of a ring with an outer ring formed by the outer layer and an inner ring formed by the inner ring.

The secondary battery may further include another or second terminal unit, the other or second terminal unit including another or second rivet terminal and another or second electrode rivet, wherein the other or second rivet terminal and the other or second electrode rivet are formed of a same metallic material.

The one terminal unit may have a polarity opposite to a polarity of the other terminal unit.

At least one of the above and other features and advantages may also be realized by providing a secondary battery module comprising a plurality of secondary batteries, at least one of the secondary batteries including an electrode assembly, the electrode assembly including a positive electrode, a negative electrode, and a separator therebetween; a case for accommodating the electrode assembly; a cap plate for sealing the case; and at least one terminal unit, the at least one terminal unit including an electrode rivet electrically connected to one of the electrodes of the electrode assembly and formed of a first metallic material, a rivet terminal formed of a second metallic material, the second metallic material being different from the first metallic material, and a clad unit between the electrode rivet and the rivet terminal.

The secondary battery module may further include a bus bar coupled to the rivet terminal of the at least one secondary battery and to an adjacent secondary battery, the bus bar being formed of the first metallic material.

At least one of the above and other features and advantages may also be realized by providing a secondary battery module, comprising a plurality of secondary batteries, at least one of the secondary batteries including an electrode assembly, the electrode assembly including a positive electrode, a negative electrode, and a separator therebetween; a case for accommodating the electrode assembly; a cap plate for sealing the case; at least one terminal unit, the at least one terminal unit including an electrode rivet electrically connected to one of the electrodes of the electrode assembly and formed of a first metallic material, a rivet terminal formed of the first metallic material; a bus bar coupled to the terminal unit of at least one of the secondary batteries and to an adjacent secondary battery and formed of a second metallic material, the second metallic material being different from the first metallic material; and a clad unit between the bus bar and the rivet terminal.

The clad unit may surround an outer edge of the bus bar.

The clad unit may include an outer layer surrounding an inner layer, the outer layer being formed of the first metallic material, and the inner layer being formed of the second metallic material.

The outer layer may be welded to the rivet terminal.

The inner layer may be welded to the bus bar.

The clad unit preferably has the form of a ring with an outer ring formed by the outer layer and an inner ring formed by the inner ring.

The at least one secondary battery may further include another or second terminal unit, the other or second terminal unit including another or second rivet terminal, another or second electrode rivet, and another or second bus bar, wherein the other rivet terminal, the other electrode rivet, and the other bus bar are formed of a same metallic material. The one terminal unit may have a polarity opposite to a polarity of the other terminal unit.

The electrode rivet may be engaged with the rivet terminal.

### BRIEF DESCRIPTION OF THE DRAWINGS

The above and other features and advantages will become more apparent to those of ordinary skill in the art by describing in detail exemplary embodiments with reference to the attached drawings, in which:
FIG. 1 illustrates a perspective view of a secondary battery module according to an embodiment;
FIG. 2 illustrates a cross-sectional view of a secondary battery of the secondary battery module of FIG. 1;
FIG. 3 illustrates a structural view of an electrode assembly of the secondary battery of FIG. 2;
FIGS. 4A through 4C illustrate cross-sectional views of stages in a method of bonding a negative electrode rivet and a rivet terminal in the secondary battery of FIG. 2;
FIG. 5 illustrates a cross-sectional view of a terminal unit according to another embodiment;
FIG. 6 illustrates a perspective view of a secondary battery module according to another embodiment; and
FIG. 7 illustrates a cross-sectional view of a secondary battery of the secondary battery module of FIG. 6.

### DETAILED DESCRIPTION

Example embodiments will now be described more fully hereinafter with reference to the accompanying drawings; however, they may be embodied in different forms and should not be construed as limited to the embodiments set forth herein.

Like reference numerals refer to like elements throughout.

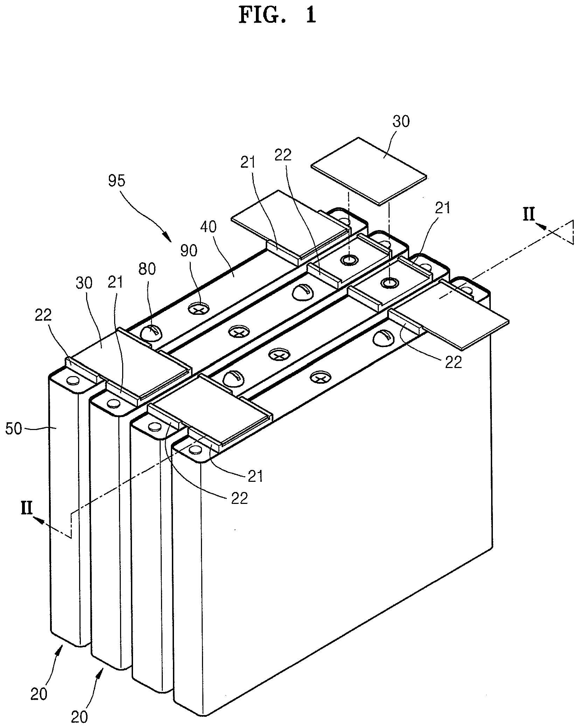

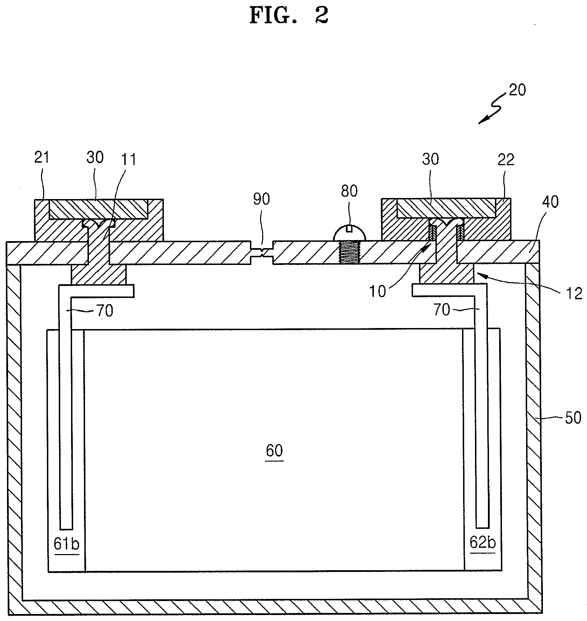

FIG. 1 illustrates a perspective view of a secondary battery module according to an embodiment. FIG. 2 illustrates a cross-sectional view of a secondary battery of the secondary battery module of FIG. 1. As illustrated in FIGS. 1 and 2, the secondary battery 20 according to the present embodiment may include an electrode assembly 60 in which a positive electrode, a negative electrode, and a separator are wound in the form of a jelly roll, current collecting plates 70 coupled to respective ends of the electrode assembly 60, a case 50 for accommodating the electrode assembly 60 and the current collecting plates 70, and a cap assembly 40 coupled to an opening of the case 50. Accordingly, the electrode assembly 60 to which the current collecting plates 70 are coupled may be inserted into the case 50 through the opening and then covered by the cap assembly 40, thereby preparing a secondary battery 20 in which the electrode assembly 60 is safely accommodated.

The cap assembly 40 may include a sealing member 80 for sealing an inlet after an electrolyte is injected into the case 50 through the inlet. The cap assembly 40 may also include a safety vent 90 that is capable of being broken so as to discharge a gas when an internal pressure of the secondary battery 20 is excessively increased.

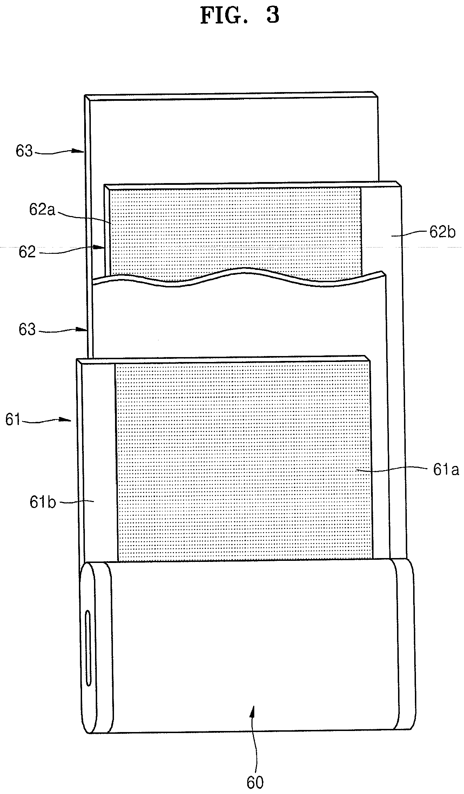

FIG. 3 illustrates a structural view of an electrode assembly of the secondary battery of FIG. 2. As illustrated in FIG. 3, the electrode assembly 60 may be formed by alternately stacked a positive electrode 61, a separator 63, and a negative electrode 62 and then winding them in the form of a jelly roll. A positive electrode active material 61 a may be coated on the positive electrode 61 and a negative electrode active material 62a may be coated on the negative electrode 62. Positive and negative electrode uncoated parts 61b and 62b on which an active material is not coated may be respectively formed on ends of the positive and negative electrodes 61 and 62. The positive electrode uncoated part 61b may be disposed at one end of the electrode assembly 60 and the negative electrode uncoated part 62b may be disposed at another end of the wound electrode assembly 60. For example, as illustrated in FIG. 3, the positive electrode uncoated part 61b may be disposed at a left end of the electrode assembly 60 and the negative electrode uncoated part 62b may be disposed at a right end of the electrode assembly 60. Accordingly, a left current collecting plate 70 illustrated in FIG. 2 may be electrically connected to the positive electrode 61 of the electrode assembly 60, and a right current collecting plate 70 may be electrically connected to the negative electrode 62 of the electrode assembly 60. Then, the left and right current collecting plates 70 may be respectively connected to a positive electrode rivet 11 and a negative electrode rivet 12 of a terminal unit.

The terminal unit may include the positive and negative electrode rivets 11 and 12, rivet terminals 21 and 22 respectively welded to the positive and negative electrode rivets 11 and 12, and bus bars 30 respectively welded to the rivet terminals 21 and 22 so as to form a serial or parallel connection structure with neighboring secondary batteries 20. In the present embodiment, the positive electrode rivet 11, the rivet terminals 21 and 22, and the bus bars 30 may be formed of similar metals, e.g., aluminum materials, and the negative electrode rivet 12 may be formed of a dissimilar metal, e.g., a copper material. In this case, welding between the positive electrode rivet 11 and the rivet terminal 21 or between the rivet terminals 21 and 22 and the bus bars 31 and 32 may include similar metal welding. Accordingly, the similar metal welding may obtain a sufficient welding strength without any particular problem and thus may be preformed by using a suitable well-known method. However, since a bonding strength may be reduced if dissimilar metal welding is performed to bond the negative electrode rivet 12 and the rivet terminal 22 to each other, a clad metal 10, e.g., a dissimilar metal joint material, may be interposed therebetween such that similar metal welding may be performed at two sides of the clad metal 10.

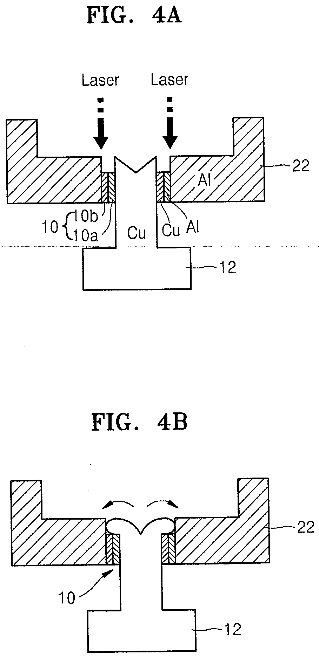

FIGS. 4A through 4C illustrate cross-sectional views of stages in a method of bonding a negative electrode rivet and a rivet terminal in the secondary battery of FIG. 2. Here, as illustrated in FIG. 4A, the clad metal 10 may be formed in a ring shape by, e.g., pressure-welding a copper member or inner layer 10a formed of a copper material as in the negative electrode rivet 12 and an aluminum member or outer layer 10b formed of an aluminum material as in the rivet terminal 22 so as to surround the negative electrode rivet 12. If welding is performed by inserting the clad metal 10 between the negative electrode rivet 12 and the rivet terminal 22 such that similar materials contact each other, the similar materials may be welded to each other and thus a sufficient bonding strength may be obtained.

The above-described terminal unit may be welded as described below.

Initially, as illustrated in FIG. 4A, the clad metal 10 may be inserted between the negative electrode rivet 12 and the rivet terminal 22. For this, the rivet terminal 22 comprises a through-hole and the negative electrode rivet 12 is inserted into this through- hole. The clad unit 10 surrounds on one side the inner side of the rivet terminal through-hole and on the other side the outer side of the negative electrode rivet 12. Preferably, the negative electrode rivet 12 has a circular horizontal cross-section such that the ring shaped clad unit 10 can closely contact the negative electrode rivet 12. In more general terms, the shape of the clad unit 10 corresponds to the shape of the negative electrode rivet 12. The rivet terminal 22 and the clad metal 10 may be coupled to each other by, e.g., a laser welding method. In this case, the clad metal 10 may be inserted so as to contact the similar materials of the negative electrode rivet 12 and the rivet terminal 22. Accordingly, similar materials, e.g., aluminum materials or copper materials, may be welded to each other.

Then, as illustrated in FIG. 4B, a front end of the negative electrode rivet 12 may be rivet-processed so as to closely contact upper portions of the clad metal 10. Thus, the clad metal 10 may be locked by the rivet-processed front end of the negative electrode rivet 12 and may not be separated therefrom.

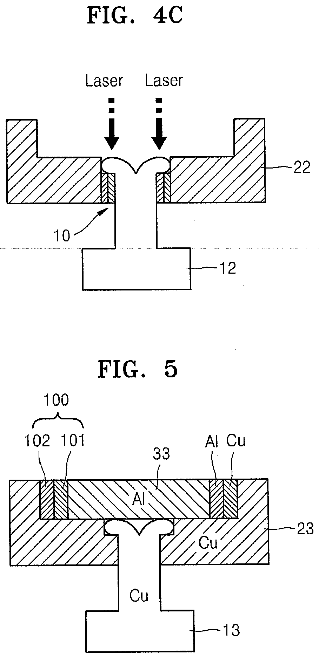

After that, as illustrated in FIG. 4C, boundaries between the negative electrode rivet 12 and the clad metal 10 may be bonded by, e.g., a laser welding method. In this case, the welded portions of the negative electrode rivet 12 and the clad metal may be are similar metals, e.g., copper materials, and thus an appropriate bonding strength may be obtained. For example, the front end of the negative electrode rivet 12 may be welded to the inner layer 10a of the clad metal 10

Also, bonding between the rivet terminals 21 and 22 and the bus bars 30 may include similar metal welding between aluminum materials, and thus may be preformed by using a general laser welding method.

Accordingly, as described above, since similar metal welding may be performed when a terminal unit for a secondary battery is assembled, a very stable and solid bonding structure may be formed.

FIG. 5 illustrates a cross-sectional view of a terminal unit according to another embodiment. In FIG. 5, a clad metal 100 may be inserted between a rivet terminal 23 and a bus bar 33 instead of between a negative electrode rivet 13 and the rivet terminal 23. Thus, the solution in Fig. 5 can be used as an alternative to the solutions shown in the previous embodiments. For example, the rivet terminal 23 may be formed of a copper material, similar to the negative electrode rivet 13. In this case, welding between the negative electrode rivet 13 and the rivet terminal 23 is similar metal welding and thus drawbacks associated with dissimilar metal welding may be avoided. However, welding between the rivet terminal 23 formed of a copper material and the bus bar 33 formed of an aluminum material may include dissimilar metal welding.

Accordingly, the clad metal 100 may be inserted between the rivet terminal 23 and the bus bar 33 such that similar metal welding may be performed. In this case, the clad metal 100 may include an aluminum member 101 at an inner side and a copper member 102 at an outer side so that similar metals contact the rivet terminal 23 and the bus bar 33, respectively. Accordingly, similar metal welding may be performed and thus a stable bonding strength may be obtained.

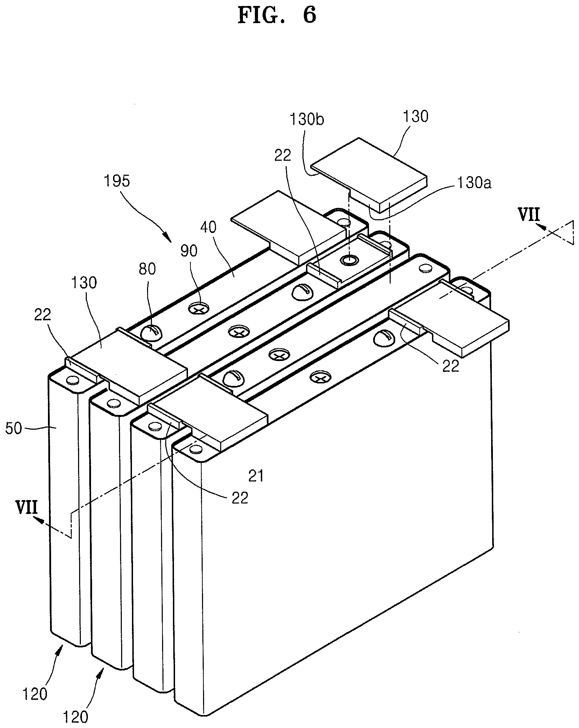

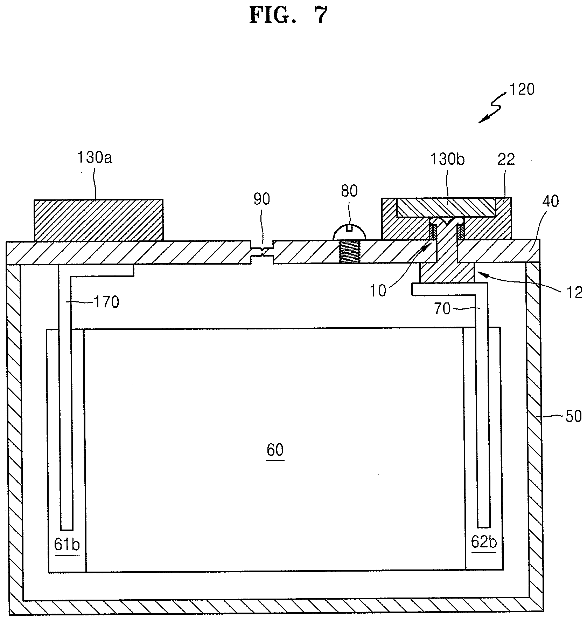

FIG. 6 illustrates a perspective view of a secondary battery module according to another embodiment. FIG. 7 illustrates a cross-sectional view of a secondary battery of the secondary battery module of FIG. 6. A repeated description of elements similar to those of the previous embodiment will be omitted.

Referring to FIGS. 6 and 7, a single terminal 22 may be provided for coupling between a first current collecting plate 70 and a bus bar 130. A second current collecting plate 170 may be connected between the electrode assembly 60 and the cap assembly 40. For example, the second current collecting plate 170 may be connected to the positive electrode uncoated part 61b of the electrode assembly 60. In the secondary battery module of the present embodiment, the bus bar 130 may be directly connected to the cap assembly 40 of one of the secondary batteries 120 and connected to the terminal 22 of an adjacent secondary battery 120. For example, the bus bar 130 may include a first part 130a and a second part 130b. The first part 130a may have a thickness greater than a thickness of the second part 130b. The first part 130a may be connected to the cap assembly 40 of the one secondary battery 120 and the second part 130b may be connected to the terminal 22 of the adjacent secondary battery 120 to connect the secondary batteries 120 in series or in parallel. Accordingly, due to the difference in height between the first part 130a and the second part 130b, a top surface of the bus bar 130 may have a flat, uniform surface. In an implementation, the cap assembly 40 of the one secondary battery 120 may have a polarity opposite to the terminal 22 of the adjacent secondary battery 120.

Meanwhile, although the above descriptions are provided with respect to a dissimilar metal welding between a rivet terminal and a negative electrode rivet from among electrode rivets, in some cases, the dissimilar metal welding may occur when welding a rivet terminal and a positive electrode rivet. Accordingly, regardless of the type of electrode rivet, when dissimilar metal welding is required between an electrode rivet and a rivet terminal, or between a rivet terminal and a bus bar, if a clad metal, e.g., a dissimilar metal joint material, is inserted therebetween, a stable and solid bonding structure may be obtained.

In this regard, since the positive and negative electrode rivets are generally formed of dissimilar metals, if the rivet terminals are formed using one metal, absent the embodiments discussed herein, dissimilar metal welding may be performed between the positive electrode rivet or the negative electrode rivet and a rivet terminal. Accordingly, a reduction in weldability may occur and a low bonding strength may ensue. If, instead, the rivet terminals are formed of dissimilar metals corresponding to the metals for forming the positive and negative electrode rivets, weldability between the positive and negative electrode rivets and the rivet terminals may be improved. Yet, such an approach fails to address the welds between at least one of the rivet terminals and a corresponding bus bar. Hence, a reduction in weldability also ensues in that context. The embodiments disclosed herein circumvent such a reduction in weldability caused when dissimilar metal welding is performed in a terminal unit.

As a result, according the above-described embodiments, bonding may be performed between an electrode rivet and a rivet terminal, or between a rivet terminal and a bus bar by performing similar metal welding, and thus a solid bonding strength may be ensured. The embodiments provide a secondary battery including a terminal unit capable of preventing a reduction in weldability.

Exemplary embodiments have been disclosed herein, and although specific terms are employed, they are used and are to be interpreted in a generic and descriptive sense only and not for purpose of limitation.

## Claims

1. A secondary battery, comprising:
an electrode assembly (60), the electrode assembly including a positive electrode (61), a negative electrode (62), and a separator (63) therebetween;
a case (50) for accommodating the electrode assembly (60);
a cap plate (40) for sealing the case (50); and
a first terminal unit including:
a first electrode rivet (12) electrically connected to one of the electrodes (62) of the electrode assembly (60) and formed of a first metallic material, and
a first rivet terminal (22) formed of a second metallic material, the second metallic material being different from the first metallic material, **characterized in that**
the first terminal unit further includes a clad unit (10) between the first electrode rivet (12) and the first rivet terminal (22), wherein the clad unit (10) includes an outer layer (10b) surrounding an inner layer (10a), the outer layer (10b) being formed of the second metallic material and the inner layer (10a) being formed of the first metallic material.

2. The secondary battery as claimed in claim 1, wherein the outer layer (10b) is welded to the first rivet terminal (22).

3. The secondary battery as claimed in claim 1 or 2, wherein the first electrode rivet (12) is engaged with the clad unit (10), and/or is welded to the inner layer (10a) of the clad unit (10).

4. The secondary battery as claimed in one of claims 1 - 3, wherein the clad unit (10) has the form of a ring with an outer ring formed by the outer layer (10b) and an inner ring formed by the inner layer (10a).

5. The secondary battery as claimed in any of the previous claims, further comprising a second terminal unit, the second terminal unit including a second rivet terminal (21) and a second electrode rivet (11), wherein the second rivet terminal (21) and the second electrode rivet (11) are formed of a same metallic material.

6. A secondary battery module comprising a plurality of secondary batteries of one of claims 1 to 5.

7. The secondary battery module as claimed in claim 6, further comprising a bus bar (30) coupled to the first rivet terminal (22) of the at least one secondary battery and to an adjacent secondary battery, the bus bar (30) being formed of the first metallic material.

8. A secondary battery module, comprising a plurality of secondary batteries, at least one of the secondary batteries comprising:
an electrode assembly (60), the electrode assembly including a positive electrode (61), a negative electrode (62), and a separator (63) therebetween;
a case (50) for accommodating the electrode assembly (60);
a cap plate (40) for sealing the case (50);
a first terminal unit including:
a first electrode rivet (13) electrically connected to one of the electrodes (61, 62) of the electrode assembly (60) and formed of a first metallic material, a first rivet terminal (23) formed of the first metallic material; and
a bus bar (33) coupled to the terminal unit of at least one of the secondary batteries and to an adjacent secondary battery and formed of a second metallic material, the second metallic material being different from the first metallic material; **characterized in that**
the first rivet terminal (23) further includes a clad unit (100) between the bus bar (33) and the first rivet terminal (23), wherein the clad unit (100) includes an outer layer (102) surrounding an inner layer (101), the outer layer (102) being formed of the first metallic material, and the inner layer (101) being formed of the second metallic material.

9. The secondary battery module as claimed in claim 8, wherein the clad unit (100) surrounds an outer edge of the bus bar (33).

10. The secondary battery module as claimed in claim 8, wherein the outer layer (102) is welded to the first rivet terminal (23), and/or wherein the inner layer (101) is welded to the bus bar (33).

11. The secondary battery as claimed in claims 8 or 10, wherein the clad unit (100) has the form of a ring with an outer ring formed by the outer layer (102) and an inner ring formed by the inner layer (101).

12. The secondary battery module as claimed in one of the claims 8 - 11, wherein the at least one secondary battery further includes a second terminal unit, the second terminal unit including a second rivet terminal, a second electrode rivet, and a second bus bar, wherein the second rivet terminal, the second electrode rivet, and the second bus bar are formed of a same metallic material.

13. The secondary battery module as claimed in one of the claims 8 - 12, wherein the first electrode rivet (13) is engaged with the first rivet terminal (23).

## Patentansprüche

1. Sekundärbatterie, umfassend:
eine Elektrodenbaugruppe (60), wobei die Elektrodenbaugruppe eine positive Elektrode (61), eine negative Elektrode (62) und einen Separator (63) dazwischen aufweist;
ein Gehäuse (50) zum Aufnehmen der Elektrodenbaugruppe (60);
eine Abdeckplatte (40) zum dichten Verschließen des Gehäuses (50); und
eine erste Anschlusseinheit, aufweisend:
einen ersten Elektrodenniet (12), der elektrisch mit einer der Elektroden (62) der Elektrodenbaugruppe (60) verbunden und aus einem ersten Metallwerkstoff hergestellt ist; und
einen ersten Nietanschluss (22), der aus einem zweiten Metallwerkstoff hergestellt ist, wobei sich der zweite Metallwerkstoff vom ersten Metallwerkstoff unterscheidet, **dadurch gekennzeichnet, dass**
die erste Anschlusseinheit ferner eine Hülleinheit (10) zwischen dem ersten Elektrodenniet (12) und dem ersten Nietanschluss (22) aufweist, wobei die Hülleinheit (10) eine Außenschicht (10b) aufweist, die eine Innenschicht (10a) umgibt, wobei die Außenschicht (10b) aus dem zweiten Metallwerkstoff hergestellt ist und die Innenschicht (10a) aus dem ersten Metallwerkstoff hergestellt ist.

2. Sekundärbatterie nach Anspruch 1, wobei die Außenschicht (10b) an den ersten Nietanschluss (22) geschweißt ist.

3. Sekundärbatterie nach Anspruch 1 oder 2, wobei der erste Elektrodenniet (12) mit der Hülleinheit (10) in Eingriff steht und/oder an die Innenschicht (10a) der Hülleinheit (10) geschweißt ist.

4. Sekundärbatterie nach einem der Ansprüche 1 bis 3, wobei die Hülleinheit (10) die Form eines Rings aufweist, wobei ein Außenring von der Außenschicht (10b) gebildet wird und ein Innenring von der Innenschicht (10a) gebildet wird.

5. Sekundärbatterie nach einem der vorhergehenden Ansprüche, die ferner eine zweite Anschlusseinheit umfasst, wobei die zweite Anschlusseinheit einen zweiten Nietanschluss (21) und einen zweiten Elektrodenniet (11) aufweist, wobei der zweite Nietanschluss (21) und der zweite Elektrodenniet (11) aus demselben Metallwerkstoff hergestellt sind.

6. Sekundärbatteriemodul, das eine Vielzahl von Sekundärbatterien nach einem der Ansprüche 1 bis 5 umfasst.

7. Sekundärbatteriemodul nach Anspruch 6, das ferner eine Stromschiene (30) umfasst, die mit dem ersten Nietanschluss (22) der mindestens einen Sekundärbatterie und mit einer benachbarten Sekundärbatterie verbunden ist, wobei die Stromschiene (30) aus dem ersten Metallwerkstoff hergestellt ist.

8. Sekundärbatteriemodul, das eine Vielzahl von Sekundärbatterien umfasst, wobei mindestens eine der Sekundärbatterien Folgendes umfasst:
eine Elektrodenbaugruppe (60), wobei die Elektrodenbaugruppe eine positive Elektrode (61), eine negative Elektrode (62) und einen Separator (63) dazwischen aufweist;
ein Gehäuse (50) zum Aufnehmen der Elektrodenbaugruppe (60);
eine Abdeckplatte (40) zum dichten Verschließen des Gehäuses (50);
eine erste Anschlusseinheit, aufweisend:
einen ersten Elektrodenniet (13), der elektrisch mit einer der Elektroden (61, 62) der Elektrodenbaugruppe (60) verbunden und aus einem ersten Metallwerkstoff hergestellt ist,
einen ersten Nietanschluss (23), der aus dem ersten Metallwerkstoff hergestellt ist; und
eine Stromschiene (33), die mit der Anschlusseinheit von zumindest einer der Sekundärbatterien und mit einer benachbarten Sekundärbatterie verbunden ist und aus einem zweiten Metallwerkstoff hergestellt ist, wobei sich der zweite Metallwerkstoff vom ersten Metallwerkstoff unterscheidet; **dadurch gekennzeichnet, dass**
der erste Nietanschluss (23) ferner eine Hülleinheit (100) zwischen der Stromschiene (33) und dem ersten Nietanschluss (23) aufweist, wobei die Hülleinheit (100) eine Außenschicht (102) aufweist, die eine Innenschicht (101) umgibt, wobei die Außenschicht (102) aus dem ersten Metallwerkstoff hergestellt ist und die Innenschicht (101) aus dem zweiten Metallwerkstoff hergestellt ist.

9. Sekundärbatterie nach Anspruch 8, wobei die Hülleinheit (100) einen Außenrand der Stromschiene (33) umgibt.

10. Sekundärbatteriemodul nach Anspruch 8, wobei die Außenschicht (102) an den ersten Nietanschluss (23) geschweißt ist und/oder wobei die Innenschicht (101) an die Stromschiene (33) geschweißt ist.

11. Sekundärbatterie nach Anspruch 8 oder 10, wobei die Hülleinheit (100) die Form eines Rings aufweist, wobei ein Außenring von der Außenschicht (102) gebildet wird und ein Innenring von der Innenschicht (101) gebildet wird.

12. Sekundärbatteriemodul nach einem der Ansprüche 8 bis 11, wobei die mindestens eine Sekundärbatterie ferner eine zweite Anschlusseinheit aufweist, wobei die zweite Anschlusseinheit einen zweiten Nietanschluss, einen zweiten Elektrodenniet und eine zweite Stromschiene aufweist, wobei der zweite Nietanschluss, der zweite Elektrodenniet und die zweite Stromschiene aus demselben Metallwerkstoff hergestellt sind.

13. Sekundärbatteriemodul nach einem der Ansprüche 8 bis 12, wobei der erste Elektrodenniet (13) mit dem ersten Nietanschluss (23) in Eingriff steht.

## Revendications

1. Batterie secondaire, comprenant :
un ensemble d'électrodes (60), l'ensemble d'électrodes incluant une électrode positive (61), une électrode négative (62) et un séparateur (63) en position intermédiaire ;
un boîtier (50) pour loger l'ensemble d'électrodes (60) ;
une plaque de couverture (40) pour sceller le boîtier (50) ; et
une première unité de bornes incluant :
un premier rivet d'électrode (12) connecté électriquement à l'une des électrodes (62) de l'ensemble d'électrodes (60) et formé d'un premier matériau métallique, et
une première borne à rivet (22) formée d'un deuxième matériau métallique, le deuxième matériau métallique étant différent du premier matériau métallique, **caractérisée en ce que**
la première unité de bornes inclut également une unité plaquée (10) entre le premier rivet d'électrode (12) et la première borne à rivet (22), dans laquelle l'unité plaquée (10) inclut une couche extérieure (10b) entourant une couche intérieure (10a), la couche extérieure (10b) étant formée du deuxième matériau métallique, et la couche intérieure (10a) étant formée du premier matériau métallique.

2. Batterie secondaire selon la revendication 1, dans laquelle la couche extérieure (10b) est soudée à la première borne à rivet (22).

3. Batterie secondaire selon la revendication 1 ou 2, dans laquelle le premier rivet d'électrode (12) est en prise avec l'unité plaquée (10), et/ou est soudé à la couche intérieure (10a) de l'unité plaquée (10).

4. Batterie secondaire selon l'une des revendications 1- 3, dans laquelle l'unité plaquée (10) a la forme d'un anneau avec un anneau extérieur formé par la couche extérieure (10b) et un anneau intérieur formé par la couche intérieure (10a).

5. Batterie secondaire selon l'une quelconque des revendications précédentes, comprenant également une deuxième unité de bornes, la deuxième unité de bornes incluant une deuxième borne à rivet (21) et un deuxième rivet d'électrode (11), dans laquelle la deuxième borne à rivet (21) et le deuxième rivet d'électrode (11) sont formés du même matériau métallique.

6. Module de batteries secondaires, comprenant une pluralité de batteries secondaires de l'une des revendications 1 à 5.

7. Module de batteries secondaires selon la revendication 6, comprenant également une barre omnibus (30) couplée à la première borne à rivet (22) de la batterie secondaire au moins au nombre de un et à une batterie secondaire adjacente, la barre omnibus (30) étant formée du premier matériau métallique.

8. Module de batteries secondaires, comprenant une pluralité de batteries secondaires, au moins une des batteries secondaires comprenant :
un ensemble d'électrodes (60), l'ensemble d'électrodes incluant une électrode positive (61), une électrode négative (62) et un séparateur (63) en position intermédiaire ;
un boîtier (50) pour loger l'ensemble d'électrodes (60) ;
une plaque de couverture (40) pour sceller le boîtier (50) ;
une première unité de bornes incluant :
un premier rivet d'électrode (13) connecté électriquement à l'une des électrodes (61, 62) de l'ensemble d'électrodes (60) et formé d'un premier matériau métallique,
une première borne à rivet (23) formée du premier matériau métallique ; et
une barre omnibus (33) couplée à l'unité de bornes d'au moins une des batteries secondaires et à une batterie secondaire adjacente, et formée d'un deuxième matériau métallique, le deuxième matériau métallique étant différent du premier matériau métallique ; **caractérisé en ce que**
la première borne à rivet (23) inclut également une unité plaquée (100) entre la barre omnibus (33) et la première borne à rivet (23), dans lequel l'unité plaquée (100) inclut une couche extérieure (102) entourant une couche intérieure (101), la couche extérieure (102) étant formée du premier matériau métallique, et la couche intérieure (101) étant formée du deuxième matériau métallique.

9. Module de batteries secondaires selon la revendication 8, dans lequel l'unité plaquée (100) entoure un bord extérieur de la barre omnibus (33).

10. Module de batteries secondaires selon la revendication 8, dans lequel la couche extérieure (102) est soudée à la première borne à rivet (23), et/ou dans lequel la couche intérieure (101) est soudée à la barre omnibus (33).

11. Batterie secondaire selon les revendications 8 ou 10, dans lequel l'unité plaquée (100) a la forme d'un anneau avec un anneau extérieur formé par la couche extérieure (102) et un anneau intérieur formé par la couche intérieure (101).

12. Module de batteries secondaires selon l'une des revendications 8 - 11, dans lequel la batterie secondaire au moins au nombre de un inclut une deuxième unité de bornes, la deuxième unité de bornes incluant une deuxième borne à rivet, un deuxième rivet d'électrode, et une deuxième barre omnibus, dans lequel la deuxième borne à rivet, le deuxième rivet d'électrode et la deuxième barre omnibus sont formés d'un même matériau métallique.

13. Module de batteries secondaires selon l'une des revendications 8 - 12, dans lequel le premier rivet d'électrode (13) est en prise avec la première borne à rivet (23).
